# EUROPEAN PATENT SPECIFICATION

(11) **EP 1 033 806 B1**
(45) Date of publication and mention of the grant of the patent: **16.04.2003**
(21) Application number: 00103034.5
(22) Date of filing: 15.02.2000
(51) Int. Cl.: H02M 7/00, H02M 7/219

(54) **Electric power supply**
Stromversorgung
Alimentation de puissance electric

(30) Priority: 17.02.1999 JP 3851399
(43) Date of publication of application: 06.09.2000
(73) Proprietor: MATSUSHITA ELECTRIC INDUSTRIAL CO., LTD., Kadoma-shi, Osaka 571-8501 (JP)
(72) Inventor: Maeda, Shiro, Otsu-shi, Shiga 520-2101 (JP)
(74) Representative: Petruzziello, Aldo

(56) References cited:
- WO-A-93/06650
- FR-A- 2 724 507

## Description

The present invention relates to an electric power supply using rectification with a bridge rectifier circuit to supply electric power to devices and systems.

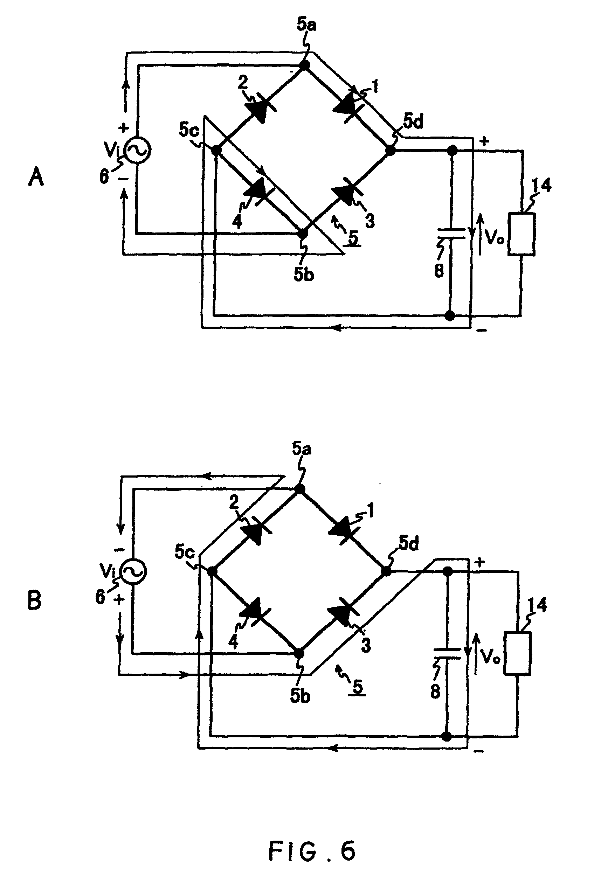

There are several known conventional methods for rectification using diodes. Figs. 6A and 6B show an example of a full-wave rectifier circuit using a bridge rectifier circuit. The full-wave rectifier circuit shown in this drawing includes a bridge rectifier circuit having four diodes 1 to 4. Numeral 14 denotes a load.

Fig. 6A illustrates the flow of current during the positive half cycle of the ac power source 6. As indicated by the arrows, the current flows through the diode 1, a smoothing capacitor 8, and the diode 4, in that order, so that a positive voltage V_{O} can be given out.

Fig. 6B illustrates the flow of current during the negative half cycle of the ac power source 6. As indicated by the arrows, the current flows through the diode 3, the smoothing capacitor 8, and the diode 2, in that order, so that a positive voltage V_{O} can be given out In other words, the full wave of the alternating input from the ac power source 6 is rectified, and a positive dc voltage can be attained.

However, in such a conventional electric power supply, the power factor is low, because an input current flows only during the period when the voltage of the ac power source 6 is higher than the dc output voltage, and there is also the problem of higher harmonics in the power supply.

As one method to improve these problems, a reactor is connected between the ac power supply 6 and the bridge rectifier circuit 5, but although this method can suppress higher harmonics, a power factor of only about 70% can be attained, so that there is the problem that the components for medium to large power supplies are big, which leads not only to bigger devices, but also to a larger load on the power system.

It is thus a purpose of the present invention to solve the problems of the prior art, and to present an electric power supply that achieves a high power factor and the suppression of higher harmonics.

To attain these objects, an electric power supply of the present invention includes an ac power source; a bridge rectifier circuit having four diodes for full-wave rectifying an alternating current produced with the ac power source; a smoothing capacitor connected to dc output terminals of the bridge rectifier circuit. A reactor connected between the ac power source and ac input terminal of the bridge rectifier circuit. A capacitor connected between an ac input terminal and a dc output terminal of the bridge rectifier circuit.

With this electric power supply, current flows right from the zero crossing of the ac voltage during both the positive half-cycle and the negative half-cycle of the ac power source, which increases the power factor. Furthermore, the reactor forms a serial resonance circuit with the capacitor or the smoothing capacitor, so that the output waveforms are smoothened, and higher harmonics are suppressed.

In this electric power supply, it is preferable that the inductance of the reactor and the static capacitance of the capacitor are selected such that during a half-cycle of ac current from the ac power source, a resonance current flows through the reactor and the capacitor and charges the capacitor, and a voltage V_{C} across the capacitor rises from zero to an output voltage V_{O} of the bridge rectifier circuit; and ac current from the ac power source discharges the capacitor during the next half-cycle so that the voltage V_{C} decreases from V_{O} to zero.

It is also preferable that the capacitor is connected between an ac input terminal of the bridge rectifier circuit and a positive dc output terminal.

It is also preferable that the capacitor is connected between an ac input terminal of the bridge rectifier circuit and a negative dc output terminal.

It is also preferable that a switching means that opens when the load is small is connected between the capacitor and a dc output terminal of the bridge rectifier circuit; and a diode is connected in parallel to the switching means, such that the diode blocks a charging of the capacitor. With such an electric power supply, the charging of the capacitor can be blocked when the load is small, so that an unnecessary increase of the output voltage can be suppressed.

It is also preferable that the switching means is connected between the capacitor and a negative dc output terminal of the bridge rectifier circuit; and the cathode of the diode connected in parallel to the switching means is connected to the side of the ac power source, and the anode of the diode connected in parallel to the switching means is connected to the negative dc output terminal.

It is also preferable that the switching means is connected between the capacitor and a positive dc output terminal of the bridge rectifier circuit; and the anode of the diode connected in parallel to the switching means is connected to the side of the ac power source, and the cathode of the diode connected in parallel to the switching means is connected to the side of the dc output terminal.

It is also preferable that the switching means opens and closes depending on an output voltage, an output current or an operating time of the load.

It is also preferable that the switching means and the diode connected in parallel to the switching means are realized as a MOSFET. With such an electric power supply, the number of components can be reduced, allowing miniaturization and reducing costs.
Figs. 1A to 1D are circuit diagrams of electric power supplies in accordance with a first embodiment of the present invention.
Figs. 2A to 2D are circuit diagrams illustrating the operation of an electric power supply in accordance with a first embodiment of the present invention.
Fig. 3A illustrates the waveforms of the ac input voltage Vᵢ, the reactor current I_{L}, and the dc output voltage V_{O} in an electric power supply in accordance with a first embodiment of the present invention.
Fig. 3B illustrates the waveforms of the ac input voltage Vᵢ, the capacitor current I_{C}, and the capacitor voltage V_{C} in an electric power supply in accordance with a first embodiment of the present invention.
Fig. 3C compares higher harmonic components of the current in an electric power supply in accordance with a first embodiment of the present invention with the recommendations according to Japanese guidelines for higher harmonics regulations.
Figs. 4A to 4D are circuit diagrams of electric power supplies in accordance with a second embodiment of the present invention.
Fig. 5 is a circuit diagram of an electric power supply in accordance with a third embodiment of the present invention.
Fig. 6 is a circuit diagram of a conventional electric power supply.

The following is an explanation of the preferred embodiments of the present invention. Elements with the same configuration as in the prior art example are denoted with the same numerals.

### First Embodiment

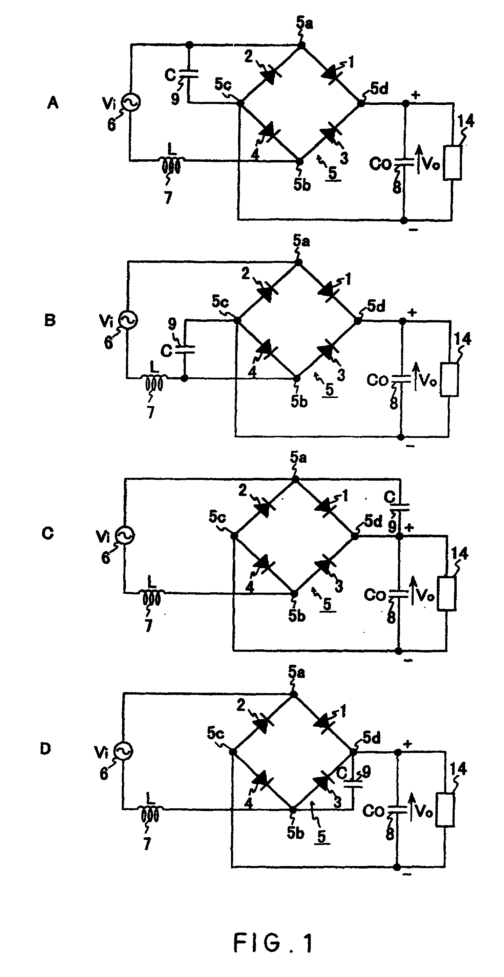

Figs. 1A to D are circuit diagrams of electric power supplies in accordance with a first embodiment of the present invention. The electric power supplies shown in Figs. 1A to D include a bridge rectifier circuit 5 made of four diodes 1 to 4, and an ac power source 6. A reactor 7 is connected between the ac power source 6 and an ac input terminal of the bridge rectifier circuit 5. A capacitor 9 is connected between an ac input terminal and a dc output terminal of the bridge rectifier circuit

In the circuits shown in Figs. 1A and 1B, the capacitor 9 is connected between either the ac input terminal 5a or 5b and the negative dc output terminal 5c of the bridge rectifier circuit 5. In the circuits shown in Figs. 1C and 1D, the capacitor 9 is connected between either the ac input terminal 5a or 5b and the positive dc output terminal 5d of the bridge rectifier circuit 5.

Furthermore, a smoothing capacitor 8 is connected between the positive dc output terminal 5d and the negative dc output terminal 5c of the bridge rectifier circuit 5. This smoothing capacitor 8 smoothens the strong ripples of the dc current obtained with the bridge rectifier circuit 5, thus producing a smooth dc current.

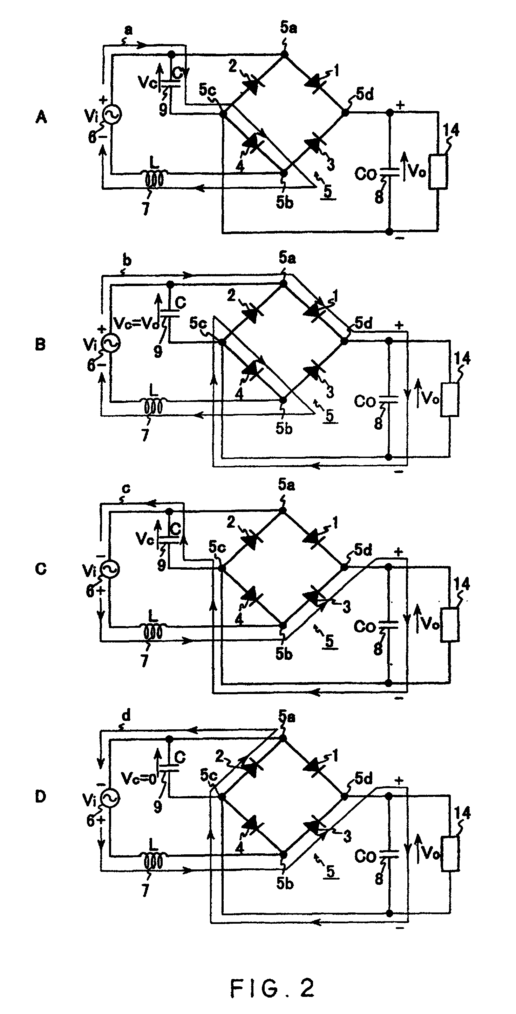

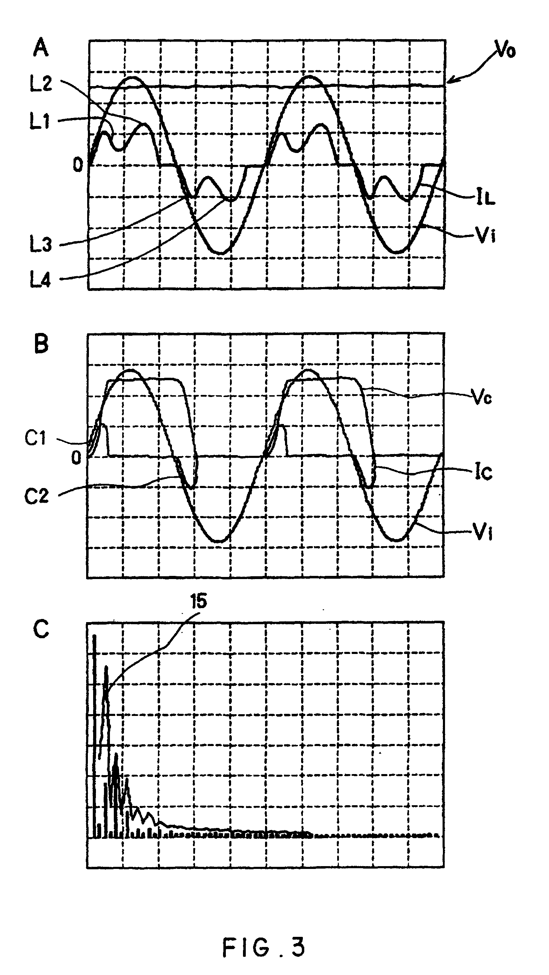

Referring to Figs. 2A to 2D, the following explains how the electric power supply shown in Fig. 1A operates. Figs. 2A and 2B illustrate the positive half cycle of the ac input voltage Vᵢ, and Figs. 2C and 2D illustrate the negative half cycle of the ac input voltage Vᵢ. Figs. 3A and 3B illustrate the waveforms of this example, for L = 10mH, C= 27µF, and C₀ = 1500µF in the electric power supply shown in Fig. 1A.

Fig. 3A illustrates the ac input voltage Vᵢ, the current I_{L} flowing through the reactor 7 (ac input current), and the dc output voltage V_{O}. Fig. 3B illustrates the ac input voltage Vᵢ, the current I_{C} flowing through the capacitor 9, and the voltage V_{C} across the capacitor 9. In both drawings, the abscissa marks time, and a horizontal interval between two neighboring broken lines corresponds to 3.33ms. The ordinate marks voltage and current, and a vertical interval between two neighboring broken lines corresponds to 100V or 5A.

In the situation shown in Fig. 2A, that is, immediately after the zero crossing of the positive half-cycle, the current flows in the direction indicated by the arrow "a". Thus, a resonance current flows from the ac power source 6 through the capacitor 9, the diode 4, and the reactor 7 in that order, charging the capacitor 9. In this situation, the reactor current I_{L} corresponds to the portion marked L₁ in Fig. 3A, and the capacitor current I_{C} corresponds to the portion marked C₁ in Fig. 3B.

As the charging of the capacitor 9 proceeds, the voltage V_{C} keeps rising. Fig. 2B shows the flow of the current after V_{C} has increased to V_{O}. In this situation, V_{C} is clamped at V_{O}, so that the current flows in the direction indicated by the arrow "b" from the ac power source 6 through the diode 1, the smoothing capacitor 8, the diode 4 and the reactor 7 in that order. The reactor current I_{L} when the current flows in the direction "b" corresponds to the portion marked L₂ in Fig. 3A.

Fig. 2C shows the situation when the polarity of the ac power source 6 has reversed from that shown in Figs. 2A and B. In this situation, the current flows from the ac power source 6 through the reactor 7, the diode 3, the smoothing capacitor 8, and the capacitor 9 in that order, as indicated by the arrow "c". In other words, because the potential of the ac power source 6 is increased by the voltage V_{C} across the capacitor 9, a current will flow through the smoothing capacitor 8 right from the zero crossing.

With a current flow as shown in this drawing, the capacitor 9 continues to be discharged, and finally V_{C} reaches zero. The reactance current I_{L} while the capacitor 9 is being discharged corresponds to the portion marked L₃ in Fig. 3A, and the capacitor current I_{C} corresponds to the portion marked C₂ in Fig. 3B.

Fig. 2D shows the situation after the capacitor 7 has been completely discharged. In this situation, the current flows from the ac power source 6 through the reactor 7, the diode 3, the smoothing capacitor 8, and the diode 2 in that order, as indicated by the arrow "d", and the voltage V_{C} across the capacitor 9 is clamped at V_{C} = 0. In this situation, the reactor current I_{L} corresponds to the portion marked L₄ in Fig. 3A.

After the negative ac half-cycle is over and the polarity of the ac power source 6 reverses again, V_{C} is clamped at 0, so that the current again flows in the direction of the arrow "a", as shown in Fig. 2A.

In this manner, the capacitor 9 is charged to V_{C} = V₀ in the situations shown in Figs. 2A and B, so that a current starts to flow right from the zero crossing. In the situation shown in Fig. 2C, the potential of the ac power source 6 is increased by the voltage V_{C} across the capacitor 9, so that a current will flow right from the zero crossing. In other words, in both the positive half-cycle and the negative half-cycle, the current from the ac power source 6 flows right from the zero crossing of the input voltage, which improves the power factor.

Moreover, because a serial resonant current flows through the reactor 7 and the capacitor 9 or the smoothing capacitor 8, the waveform becomes smooth, as shown in Fig. 3, and selecting appropriate values for the inductance L of the reactor 7 and the capacitance C of the capacitor 9, higher harmonics can be suppressed effectively. Fig. 3C shows an example comparing higher harmonic components of the current with the national guidelines 15 for higher harmonics regulations. In this drawings, the abscissa marks the order of the higher harmonics, and the ordinate marks the current (wherein the interval between two neighboring broken lines corresponds to 0.5A).

Only the power supply shown in Fig. 1A has been explained, but the operation of the power supplies shown in Figs. 1B to 1D is the same, that is, in one half-cycle of the ac input, a resonance current flows through the reactor 7 and the capacitor 9, the capacitor 9 is charged, and V_{C} rises from zero to V_{O}. Then, in the next half-cycle of the ac input, the capacitor 9 is discharged, and V_{C} drops from V_{O} to zero. This causes a current to flow right from the zero crossing of the input voltage.

### Second Embodiment

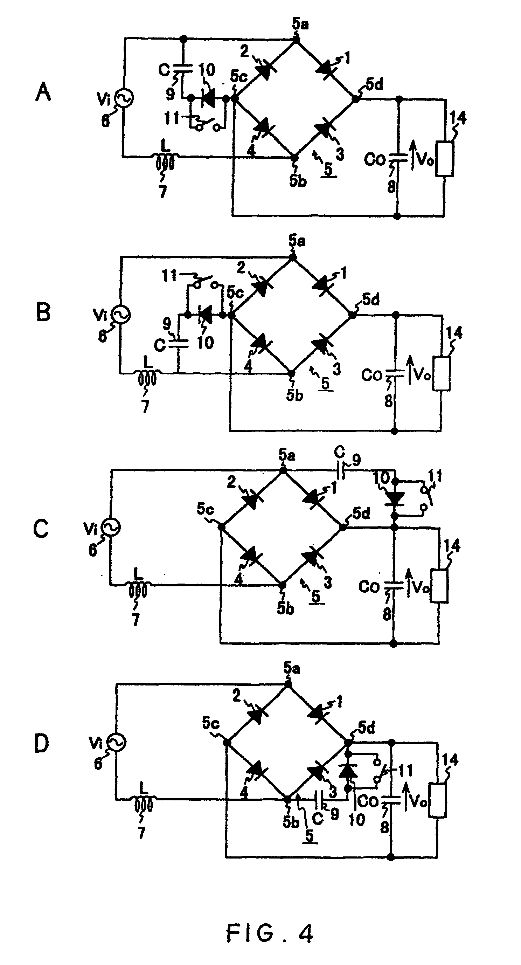

Fig. 4 shows circuit diagrams of electric power supplies in accordance with a second embodiment of the present invention. The electric power supplies shown in Figs. 4A to 4D include a diode and a switching means in addition to the components included in the electric power supply shown in Figs. 1A to 1D.

In the electric power supply of the first embodiment, the potential of the ac power source 6 is increased by the voltage V_{C} across the capacitor 9 in the situation shown in Fig. 2C. Therefore, when a small load is applied, the output voltage sometimes rises too high. In an electric power supply in accordance with the second embodiment of the present invention, a diode and a switching means are added, and for small loads below a certain value, the switching means is opened to stop the charging of the capacitor 9, which suppresses an increase of the output voltage.

In the circuit shown in Fig. 4A, a diode 10 is connected between the negative dc output terminal 5c of the bridge rectifier circuit 5 and the capacitor 9. The cathode of the diode 10 is connected to the side of the ac power source 6, and the anode of the diode 10 is connected to the negative dc output terminal 5c.

A switching means 11 is connected in parallel to the diode 10. The switching means 11 opens or closes depending on the size of the load. When the load is a small load below a certain value, the switching means 11 opens. When the switching means 11 opens, the diode 10, which is connected so as to block the resonance current, stops the charging of the capacitor 9, so that an excessive increase of the output voltage can be prevented. To open and close the switching means 11, a relay can be used, for example.

By connecting the diode 10 in parallel to the switching means 11, a charge loop as shown in Fig. 2C remains even when the switching means 11 is opened to stop the charging of the capacitor 9. Consequently, when the switching means 11 is open, the voltage V_{C} of the capacitor 9 invariably stops at 0V, and an excessive current through the capacitor 9 and the switching means 11 when the switching means 11 is closed again can be prevented. Moreover, it can be prevented that a voltage remains across the capacitor 9 after the current has been cut off, which leads to a safer system.

Detecting the load can be performed, for example, by measuring the output voltage, the load current, or the operating time of the load. In devices using a motor, it is also possible to measure the output number of revolutions of the motor.

For example, if a relay is used to open and close the switching means 11, and the output voltage is used to detect the load, the switching means is opened by cutting off the current to the relay when the output voltage increases to a certain limit, and when the output voltage decreases below a certain lower limit, a current is sent through the relay, and the switching means 11 closes. Thus, the output voltage can be kept between a certain upper limit and a certain lower limit.

In the circuit shown in Fig. 4B, a diode 10 and a switching means 11 are connected to the negative dc output terminal 5c of the bridge rectifier circuit 5 in the circuit shown in 1B. The connection and the operation are the same as for the circuit shown in 4A.

The circuits shown in Figs. 4C and 4D have the diode 10 and the switching means 11 added to the circuits shown in Figs. 1C and 1D, but they are different from the circuits in Figs. 4A and 4B in that the diode 10 and the switching means 11 are connected to the positive dc output terminal 5d. Their operation is the same as that of the circuits shown in Figs. 4A and 4B.

### Third Embodiment

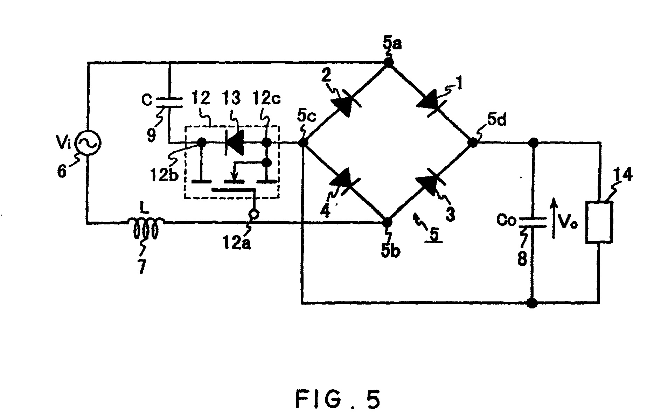

Fig. 5 is a circuit diagram of an electric power supply in accordance with the third embodiment of the present invention. The electric power supply in Fig. 5 uses a MOSFET as the switching means for the electric power supply shown in Fig. 4. The MOSFET 12 is connected between the negative dc output terminal 5c of the bridge rectifier circuit 5 and the capacitor 9. A diode 13 is integrated with the MOSFET 12, its cathode being on the side of the ac power source 6, and its anode being on the side of the dc output terminal 5c.

When no voltage is applied to the gate 12a of the MOSFET 12, no current can flow between the drain 12b and the source 12c. When a positive voltage with respect to the source 12c is applied to the gate 12a, a current flows from the drain 12b to the source 12c.

With this embodiment, the parallel circuits of diode and switching means shown in Figs. 4A to 4D can be replaced with one MOSFET, so that the number of components can be reduced, which allows for miniaturization and cost cutting.

This embodiment has been explained with a circuit corresponding to Fig. 4A, but the same effect can be attained if the parallel circuits of diode and switching means in the circuits of Figs. 4B to 4D are replaced with a MOSFET, as shown in Fig. 5.

## Claims

1. An electric power supply comprising:
an ac power source (6);
a bridge rectifier circuit (5) having four diodes (1-4) for full-wave rectifying an alternating current produced with the ac power source;
a smoothing capacitor (8) connected to dc output terminals of the bridge rectifier circuit;
**characterized by**:
a reactor (7) connected between the ac power source and ac input terminal (5b) of the bridge rectifier circuit; and
a capacitor (9) connected between an ac input terminal (5a) and a dc output terminal (5c) of the bridge rectifier circuit.

2. The electric power supply of Claim 1, **characterized in that** the inductance of the reactor and the static capacitance of the capacitor are selected such that:
during a half-cycle of ac current from the ac power source, a resonance current flows through the reactor (7) and the capacitor (8) and charges the capacitor, and a voltage V_{C} across the capacitor (8) rises from zero to an output voltage V_{O} of the bridge rectifier circuit; and
ac current from the ac power source discharges the capacitor (8) during the next half-cycle so that the voltage V_{C} decreases from V_{O} to zero.

3. The electric power supply of Claim 1 or 2, **characterized in that** the capacitor is connected between an ac input terminal (5a) of the bridge rectifier circuit and a positive dc output terminal (5d).

4. The electric power supply of Claim 1 or 2, **characterized in that** the capacitor is connected between an ac input terminal (5a) of the bridge rectifier circuit and a negative dc output terminal (5c).

5. The electric power supply of any of Claims 1 to 4, **characterized in that**
a switching means (11) that opens when the load is small is connected between the capacitor and a dc output terminal of the bridge rectifier circuit; and
a diode (10) is connected in parallel to the switching means, such that the diode blocks a charging of the capacitor.

6. The electric power supply of Claim 5, **characterized in that**
the switching means (11) is connected between the capacitor and a negative dc output terminal (5c) of the bridge rectifier circuit; and
the cathode of the diode connected in parallel to the switching means is connected to the side of tue ac power source, and the anode of the diode connected in parallel to the switching means is connected to the negative dc output terminal (5c).

7. The electric power supply of Claim 5, **characterized in that**
the switching means (11) is connected between the capacitor and a positive dc output terminal (5d) of the bridge rectifier circuit; and
the anode of the diode connected in parallel to the switching means is connected to the side of the ac power source, and the cathode of the diode connected in parallel to the switching means is connected to the side of the positive dc output terminal (5d).

8. The electric power supply of any of Claims 5 to 7, **characterized in that** the switching means (11) opens and closes depending on an output voltage, an output current or an operating time of a load (14).

9. The electric power supply of any of Claims 5 to 8, **characterized in that** the switching means (11) and the diode (1) connected in parallel to the switching means are realized as a MOSFET 12.

## Patentansprüche

1. Ein elektrisches Netzgerät, das folgendes umfaßt:
eine elektrische Wechselstromquelle (6)
einen Brücken-Gleichrichterschaltkreis (5) mit vier Dioden (1-4) zur Doppelweggleichrichtung von Wechselstrom, der von einer Wechselstromquelle erzeugt wird;
einen Stabilisierungskondensator (8), der mit den Gleichstrom-Ausgangsklemmen des Brücken-Gleichrichterschaltkreises verbunden ist;
**dadurch gekennzeichnet, daß**:
ein Reaktor (7) zwischen der Wechselstromquelle und dem Wechselstrom-Eingangsanschluß (5b) des Brücken.-Gleichrichterschaltkreises angeschlossen ist; und
Ein Kondensator (9) zwischen einer Wechselstrom-Eingangsklemme (5a) und einer Gleichstrom-Ausgangsklemme (5c) des Brücken-Gleichrichterschaltkreises angeschlossen ist.

2. Das elektrische Netzgerät gemäß Anspruch 1, **dadurch gekennzeichnet, daß** die Induktanz des Reaktors und der statische kapazitive Widerstand des Kondensators so gewählt sind, daß:
während eines halben Zyklus des Wechselstroms aus der Wechselstromquelle ein Resonanzstrom durch den Reaktor (7) und den Kondensator (8) fließt und den Kondensator auflädt, und eine Spannung Vc durch den Kondensator (8) von Null auf eine Ausgangsspannung Vo des Brücken-Gleichrichterschaltkreises ansteigt; und
ein von der Wechselstromquelle kommender Strom den Kondensator (8) während des nächsten halben Zyklus entlädt, so daß die Spannung c von Vo auf Null sinkt.

3. Das elektrische Netzgerät gemäß Anspruch 1 oder 2, **dadurch gekennzeichnet, daß** der Kondensator zwischen einem Wechselstrom-Eingangsanschluß (5a) des Brücken-Gleichrichterschaltkreises und einem positiven Gleichstrom-Ausgangsanschluß (5d) angeschlossen ist.

4. Das elektrische Netzgerät gemäß Anspruch 1 oder 2, **dadurch gekennzeichnet, daß** der Kondensator zwischen einem Wechselstrom-Eingangsanschluß (5a) des Brücken-Gleichrichterschaltkreises und einem negativen Gleichstrom-Ausgangsanschluß (5c) angeschlossen ist.

5. Das elektrische Netzgerät gemäß einem beliebigen der Ansprüche von 1 bis 4, **dadurch gekennzeichnet, daß** ein Schaltglied (11), das sich öffnet, wenn die Ladung gering ist, zwischen dem Kondensator und einem Gleichstrom-Ausgangsanschluß des Brücken-Gleichrichterschaltkreises angeschlossen ist, und eine Diode (10) paralell zu dem Schaltglied geschaltet ist, so daß die Diode das Laden des Kondensators blockiert.

6. Das elektrische Netzgerät gemäß Anspruch 5, **dadurch gekennzeichnet, daß** das Schaltglied (11) zwischen dem Kondensator und einem negativen Gleichstrom-Ausgangsanschluß (5c) des Brücken-Gleichrichterschaltkreises angeschlossen ist; und die Kathode der Diode, die parallel zum Schaltglied geschaltet ist, an die Seite der Wechselstromquelle angeschlossen ist, und die Anode der Diode, die parallel zum Schaltglied geschaltet ist, mit dem negativen Gleiehstrom-Ausgangsanschluß (5c) verbunden ist.

7. Das elektrische Netzgerät gemäß Anspruch 5, **dadurch gekennzeichnet, daß** das Schaltglied (11) zwischen dem Kondensator und einem positiven Gleichstrom-Ausgangsanschluß (5d) des Brücken-Gleichrichterschaltkreises angeschlossen ist; und die Anode der Diode, die parallel zum Schaltglied geschaltet ist, mit der Seite der Wechselstromquelle verbunden ist, und die Kathode der Diode, die parallel zum Schaltglied geschaltet ist, mit der Seite des positiven Gleichstrom-Ausgangsanschlusses (5d) verbunden ist.

8. Das elektrische Netzgerät gemäß einem beliebigen der Ansprüche von 5 bis 7, **dadurch gekennzeichnet, daß** das Schaltglied (11) sich abhängig von einer Ausgangsspannung, einem Ausgangsstrom oder einer Betriebszeit einer Ladung (14) öffnet und schließt.

9. Das elektrische Netzgerät gemäß einem beliebigen der Ansprüche von 5 bis 8, **dadurch gekennzeichnet, daß** das Schaltglied (11) und die parallel zum Schaltglied geschaltete Diode (1) als MOSFET (12) angelegt sind.

## Revendications

1. Un dispositif d'alimentation électrique comprenant :
une source électrique c.a. (6) ;
un circuit redresseur en pont (5) possédant quatre diodes (1-4) pour la rectification totale de l'onde d'un courant alternatif produit par l'alimentation électrique c.a.;
un condensateur stabilisateur (8) branché aux bornes de sortie c.c. du circuit redresseur en pont ;
**caractérisé par** :
une bobine de réactance (7) branchée entre l'alimentation électrique c.a. et la borne d'entrée c.a. (56) du circuit redresseur en pont ; et
un condensateur (9) branché entre une borne d'entrée c.a. (5a) et une borne de sortie c.c. (5c) du circuit redresseur en pont.

2. Dispositif d'alimentation électrique conforme à la revendication 1, **caractérisé par le fait que** l'inductance de la bobine de réactance et la capacité statique du condensateur sont sélectionnés de manière à :
pendant un demi-cycle de courant c.a. provenant de la source électrique c.a., un courant de résonance passe à travers la bobine de réactance (7) et le condensateur (8) et charge le condensateur, et un voltage Vc à travers le condensateur (8) passe de zéro à un voltage de sortie Vo du circuit redresseur en pont ; et
le courant c.a. provenant de l'alimentation c.a. décharge le condensateur (8) pendant le demi-cycle suivant, de manière à ce que le voltage Vc passe de Vo à zéro.

3. Dispositif d'alimentation électrique conforme aux revendications 1 ou 2 **caractérisé par le fait que** le condensateur est branché entre une borne d'entrée c.a. (Sa) du circuit redresseur en pont et une borne de sortie c.c. positive.

4. Dispositif d'alimentation électrique conforme aux revendications 1 ou 2 **caractérisé par le fait que** le condensateur est branché entre une borne d'entrée c.a. (5a) du circuit redresseur en pont et une borne de sortie c.c. négative (5c).

5. Dispositif d'alimentation électrique conforme à n'importe laquelle des revendications 1 à 4, **caractérisé par le fait qu'**il y a un interrupteur (11) qui s'ouvre quand la charge est réduite, branché entre le condensateur et une borne de sortie c.c. du circuit redresseur en pont ; et
une diode (10) est branchée en parallèle sur l'interrupteur, de manière à ce que la diode bloque une charge du condensateur.

6. Dispositif d'alimentation électrique conforme à la revendication 5, **caractérisé par le fait que** l'interrupteur (11) est branché entre le condensateur et une borne de sortie c.c. négative (5c) du circuit redresseur en pont ; et
la cathode de la diode branchée en parallèle sur l'interrupteur est branchée sur le côté de l'alimentation électrique c.a., et l'anode de la diode branchée en parallèle sur l'interrupteur est branchée sur la borne de sortie c.c. négative (5c).

7. Dispositif d'alimentation électrique conforme à la revendication 5, **caractérisé par le fait que** l'interrupteur (11) est branché entre le condensateur et une borne de sortie c.c. positive (5d) du circuit redresseur en pont ; et
l'anode de la diode branchée en parallèle sur l'interrupteur est branchée sur le côté de l'alimentation électrique c.a., et la cathode de la diode branchée en parallèle sur l'interrupteur est branchée sur le côté de la borne de sortie c.c. positive (5d).

8. Dispositif d'alimentation électrique conforme à n'importe laquelle des revendications 5 à 7, **caractérisé par le fait que** l'interrupteur (11) s'ouvre et se ferme en fonction d'un voltage de sortie, d'un courant de sortie ou du délai d'une charge (14).

9. Dispositif d'alimentation électrique conforme à n'importe laquelle des revendications 5 à 8, **caractérisé par le fait que** l'interrupteur (11) et la diode (1) branchée en parallèle sur l'interrupteur sont réalisés en MOSFET (12).
